Europäisches Patentamt

European Patent Office

Office européen des brevets

(11) Veröffentlichungsnummer: **0 504 830 A1**

## (12) EUROPÄISCHE PATENTANMELDUNG

(21) Anmeldenummer: **92104668.6**

(22) Anmeldetag: **18.03.92**

(51) Int. Cl.5: **A47J 27/09**, A47J 45/06

(30) Priorität: **21.03.91 DE 4109242**

(43) Veröffentlichungstag der Anmeldung:
**23.09.92 Patentblatt 92/39**

(84) Benannte Vertragsstaaten:
**PT**

(71) Anmelder: **ALFA INSTITUT AG**
**Langmattstrasse 1**
**CH-6343 Rotkreuz(CH)**

(72) Erfinder: **Mendler, Alfred**
**c/o Keil & Schaafhausen, Eysseneckstrasse 31**
**W-6000 Frankfurt am Main 1(DE)**
Erfinder: **Anschütz, Theo**
**c/o Keil & Schaafhausen, Eysseneckstrasse 31**
**W-6000 Frankfurt am Main 1(DE)**

(74) Vertreter: **Keil, Rainer A., Dipl.-Phys. Dr. et al**
**KEIL & SCHAAFHAUSEN Patentanwälte**
**Eysseneckstrasse 31**
**W-6000 Frankfurt am Main 1(DE)**

(54) **Topf.**

(57) Die Erfindung bezieht sich auf einen Topf zum Garen von Kochgut od. dgl., bestehend aus Gefäß und Deckel, mit einer Einrichtung zum Anzeigen des Topfinnendruckes, welche an der Topfwandung (1) vorgesehen ist, wobei ein Bereich der Topfwandung (1) von einer flexiblen Membrane (3) gebildet ist, welcher eine Einrichtung zur Übertragung der druckbedingten Durchbiegung der Membrane (3) an ein Anzeigeelement (21) zugeordnet ist.

FIG.1

Die Erfindung bezieht sich auf einen Topf zum Garen von Kochgut od. dgl., bestehend aus Gefäß und Deckel, mit einer Einrichtung zum Anzeigen des Topfinnendruckes, welche an der Topfwandung, d.h. der Deckel- oder der Gefäßwandung, vorgesehen ist.

Infolge der Anzeige des Topfinnendruckes, resultierend aus dem steigenden oder fallenden Dampfdruck im Topfinneren, kann der Benutzer feststellen, ob er die Heizleistung der Kochstelle durch Nachregulieren anpassen muß oder nicht. Alle bekannten Druckanzeigeeinrichtungen, z.B. federbelastete Ventile oder Manometer, haben den Nachteil, daß sie verschmutzen und dadurch zu Fehlfunktionen führen. Dies ist darauf zurückzuführen, daß deren mechanisch wirkenden Teile mit den festen oder flüssigen Bestandteilen des Kochgutes in Berührung kommen können. Die Funktionsfähigkeit wird insbesondere dann beeinträchtigt, wenn die Verschmutzung von klebriger Art ist. Dabei kann es sogar zu einem vollständigen Ausfall der Druckkontrollanzeige kommen.

Aufgabe der Erfindung ist es daher, einen Topf der eingangs genannten Art zu schaffen, bei welchem insbesondere die zuvor genannten Nachteile vermieden sind und eine zuverlässige Druckanzeige erfolgt.

Diese Aufgabe wird erfindungsgemäß im wesentlichen dadurch gelöst, daß ein Bereich der Topfwandung von einer flexiblen Membrane gebildet ist, welcher eine Einrichtung zur Übertragung der druckbedingten Durchbiegung der Membrane an ein Anzeigeelement zugeordnet ist.

Mit der Erfindung ist die Membrane also unmittelbar oder mittelbar integrierter, mit ihrem Rand gegenüber der Topfwandung dicht verbundener oder eingespannter Bestandteil der Topfwandung und nur einer druckbedingten Durchbiegung unterworfen, ohne eine Öffnung freizugeben, wie dies demgegenüber bei federbelasteten Anzeigeventilen der Fall ist. Hierdurch wird die Funktionssicherheit beim Dampfdruckkochen entscheidend verbessert. Die Membrane gestattet es, den jeweiligen Druckzustand im Topfinneren an ein außerhalb des Kochraumes, beispielsweise auf dem Deckel, angeordnetes Anzeigeinstrument, zu übertragen. Die Membrane trennt somit den Kochraum ständig von dem Anzeigeraum; lediglich ihre durch den variablen Topfinnendruck bedingte Durchbiegebewegung wird für die Anzeige des Druckzustandes im Topfinneren ausgenutzt. Die Funktion der Membrane wird durch aufkochendes Kochgut nicht beeinträchtigt, da die Membranbewegung ausschließlich druckabhängig ist. Die dem Topfinneren zugewandte Seite der Membrane ist nahezu glatt und kann daher nach der Benutzung des Topfes sowohl von Hand als auch mittels maschineller Spülung leicht gereinigt werden.

In besonderer Ausgestaltung der Erfindung ist die Membrane einstückig aus der Tofpwandung selbst herausgearbeitet.

Die Topfmembrane kann aber auch eine Öffnung in der Topfwandung dauerhaft verschließen, was beispielsweise dadurch verwirklicht sein kann, daß die Membrane, die Öffnung überdeckend, mit der Topfwandung druckdicht verschweißt oder verlötet ist.

Bei einer anderen Ausgestaltung der Erfindung ist die Membrane Teil eines z.B. hülsenförmigen Gehäuses, welches in die Öffnung der Topfwandung, z.B. durch Verschrauben und z.B. durch Zwischenlage einer Dichtung, druckdicht einsetzbar ist.

Die Membrane kann dabei einstückig mit dem Gehäuse ausgebildet oder mit diesem druckdicht verschweißt, verlötet, verspannt oder auf andere Weise druckdicht verbunden sein.

Ein einfaches Einsetzen der Membrane in die Öffnung der Topfwandung kann hierbei dadurch erfolgen, daß das Gehäuse mit einem Gewindeabschnitt nach innen durch die Öffnung der Topfwandung hindurchragt und auf den Gewindeabschnitt ein Sicherungselement aufgeschraubt ist. So wird das Gehäuse zuverlässig aber lösbar an der Topfwandung festlegbar.

Die Übertragungseinrichtung kann grundsätzlich mechanischer, opto-mechanischer, elektro-mechanischer, elektro-optischer oder elektronischer Natur sein.

Die Einrichtung zur Übertragung der Durchbiegung der Membrane auf ein Anzeigeelement kann mechanisch beispielsweise dadurch verwirklicht sein, daß ein von der Membrane beaufschlagter topfaußenseitiger Stößel oder entsprechende andere Mittel zur Bewegungsübertragung vorgesehen ist bzw. sind, dessen bzw. deren druckbedingte, von der Membrane herrührende Bewegung in die Bewegung oder sonstige Einstellung eines Anzeigeelements, z.B. eines Skalenzeigers, umgesetzt wird.

Der Stößel kann dabei an einem gehäusefesten Träger geführt sein.

Damit der Stößel zuverlässig auch bei Absenken des Druckes im Topfinneren immer in Anlage an der Membrane verbleibt, kann der Stößel gegenüber dem Träger in Richtung der Membrane mittels Feder vorgespannt sein.

Um eine zu große Auslenkung der Membrane bei übermäßig ansteigendem Topfinnendruck zu vermeiden, kann der Bewegungsweg des Stößels und damit die Durchbiegung der Membrane nach außen durch Anschlagmittel begrenzt sein.

Bei einer besonders einfachen konstruktiven Ausgestaltung der Erfindung ist der Träger als Führungsstab und der Stößel als den Führungsstab übergreifende Hülse ausgebildet.

Die Halterung des Trägers erfolgt zweckmäßigerweise über eine topfwandungsparallele Trägerplatte, welche mit dem Gehäuse, z.B. durch Einbördeln, verbunden ist.

An der Trägerplatte kann gleichzeitig das Anzeigeelement beweglich, z.B. drehbar gelagert sein.

Die Trägerplatte kann auch eine Skaleneinteilung für das Anzeigeelement tragen.

Mit der Erfindung wird ferner vorgeschlagen, das Gehäuse hülsenförmig, vorzugsweise im wesentlichen hohlzylindrisch auszubilden sowie eine topfabgewandte Öffnung des Gehäuses, z.B. durch Einbördeln, mittels eines z.B. eine Skaleneinteilung aufweisender Schaufensters und eine topfzugewandte Öffnung des Gehäuses mittels der Membrane wasser- und dampfdicht zu verschließen.

Dabei ist die Übertragungseinrichtung vorzugsweise innerhalb des Gehäuses in einem einerseits von dem Schaufenster und andererseits von der Membrane dicht verschlossenen kammerartigen Innenraum angeordnet.

Die Trägerplatte oder das Schaufenster können auch, insbesondere wenn es sich bei der Übertragungseinrichtung um eine elektronische Übertragungseinrichtung handelt, als z.B. digitales Displayanzeigeelement ausgebildet sein.

Beim Abkühlen des Topfes kann es gelegentlich vorkommen, daß im Topfinneren ein Unterdruck entsteht. Um zu vermeiden, daß sich in diesem Falle die Membrane übermäßig nach innen durchbiegt, kann gemäß einem weiteren Erfindungsmerkmal der Membrane topfinnenseitig ein vorzugsweise verstellbarer Anschlag zugeordnet sein.

Der Anschlag kann beispielsweise einen Teil des Sicherungselements für das Gehäuse sein.

Wenn gemäß einem weiteren Erfindungsmerkmal die Membrane gegenüber der Ebene der Topfwandung nach außen zurückgesetzt ist, d.h. z.B. im Abstand von dem topfinnenseitigen Ende des Gehäuses in dieses eingesetzt ist, wird vor der Membrane ein Dampfpolster geschaffen, welches dem Schutz der Membrane gegen Berührung mit Kochgut dient.

Damit das Gehäuse gleichzeitig zur Handhabung des Gefäßes und insbesondere des Deckels dienen kann, ist das Gehäuse vorzugsweise von einem Griffknopf aus wärmeisolierendem Material umschlossen.

Der Griffknopf kann zumindest begrenzt beweglich an dem Gehäuse geführt sein, um damit weitere Funktionen ausüben zu können, beispielsweise Anzeigeeinschalt- oder -umschaltfunktionen oder Sichtbarmachen der Temperatur, der Garzeit oder dgl. Meßwerte. Die Membrane erstreckt sich vorzugsweise im wesentlichen in oder parallel der Ebene der Topfwandung und besteht vorzugsweise aus Metall, insbesondere rostfeiem Stahl oder einer Bronzelegierung. Hierdurch ist sie leicht druck- und vakuumdicht in die Topfwandung oder das gesonderte Gehäuse einschweißbar oder einlötbar, dauerhaft in der Funktion und leicht zu reinigen. Unter der Druck- bzw. Unterdruckbeanspruchung wird sie nur wenige Zehntel Millimeter ausgelenkt. Es kann eine leicht gewellte Membrane Einsatz finden, wie sie etwa von Manometern bekannt ist.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:

Fig. 1 einen Vertikalschnitt in einer die Symmetrieachse enthaltenen Ebene einer erfindungsgemäßen Einrichtung zum Anzeigen des Topfinnendruckes,

Fig. 2 einen Schnitt der Anzeigeeinrichtung gemäß Schnittlinie A-B von Fig. 1,

Fig. 3 eine Draufsicht auf das Anzeigeinstrument von Fig. 1,

Fig. 4 einen Detailschnitt entsprechend Schnittlinie C-D von Fig. 1,

Fig. 5 eine Teilansicht Richtung G von Fig. 1 gesehen,

Fig. 6 eine Teilansicht aus Richtung H von Fig. 1 gesehen, und

Fig. 7 einen Horizontalschnitt entsprechend der Schnittlinie E-F von Fig. 5.

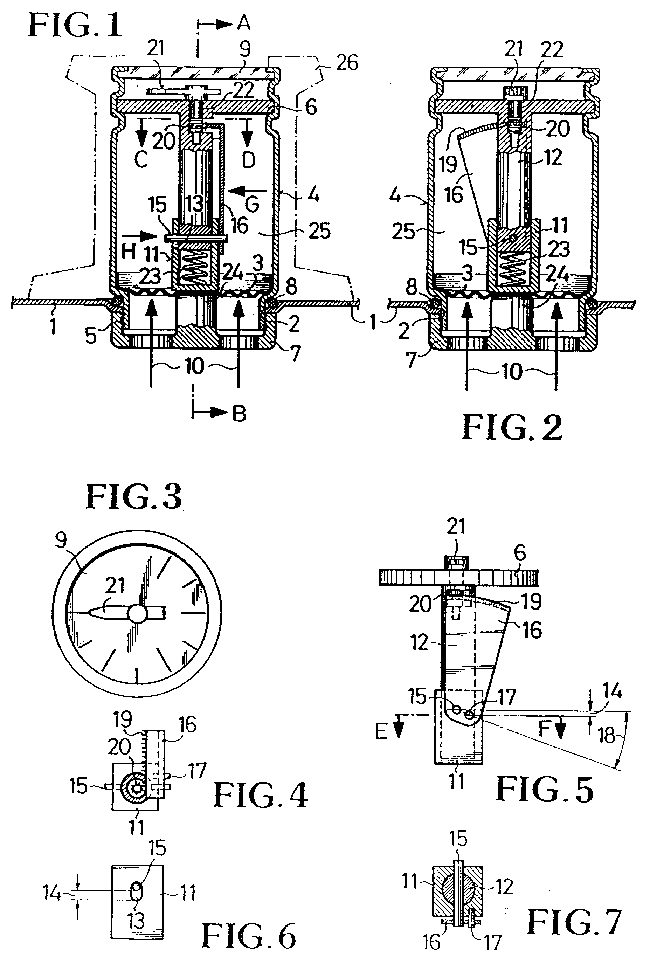

Gemäß Fig. 1 weist die. Topfwandung 1, im speziellen Fall z.B. die Deckelwandung eines Dampfdruckkochtopfes, eine Öffnung 2 auf, welche von einer Membrane 3 dauerhaft verschlossen ist. Die Membrane 3 ist ein rundes, an seinen Rand eingespanntes im wesentlichen ebenes, eventuell bereichsweise wellenförmig ausgebildetes Plättchen vorzugsweise aus Metall, z.B. aus rostfeiem Stahl oder einer Bronzelegierung. Zu diesem Zweck ist die Membrane 3 in ein hülsenförmiges, im wesentlichen hohlzylindrisches Gehäuse 4 druck- und vakuumdicht eingeschweißt oder eingelötet und liegt im wesentlichen in oder parallel der Ebene der Topfwandung 1. Das Gehäuse 4 hat einen topfwandseitigen verjüngten Gewindeabschnitt 5, mit welchem es von außen durch die Öffnung 2 hindurchgesteckt werden kann. Von innen ist ein Sicherungselement 7 auf den Gewindeabschnitt 5 aufgeschraubt, so daß das Gehäuse 4 mit einer am Übergang des Gewindeabschnittes 5 zu der übrigen Gehäusewandung vorgesehenen Ringschulter gegen eine als O-Ring ausgebildete Dichtung 8 druck- und vakuumdicht gepreßt wird, welcher in einer die Öffnung 2 begrenzenden Umfangsnut angeordnet ist. Die Membrane 3, welche auf der Oberseite der genannten Schulter der Gehäusewandung aufliegt und dort verschweißt bzw. verlötet ist, bildet dadurch einen integrierten Bestandteil der Topfwandung 1 und ist deren Ebene gegenüber etwas zurückgesetzt. Die Membrane 3 ist, abhängig vom Topfinnendruck 10, mehr oder weniger großen Durchbiegungen im Bereich von einigen Zehntel Millimeter ausgesetzt, während sie an ihrem Umfangsrand fest eingespannt ist. Das Sicherungselement 7 bildet einen gewissen Schutz der Membrane 3 gegen Berührung mit Kochgut.

Es ist auch möglich, die Membrane 3 unmittelbar als einstückigen Teil der Topfwandung 1 auszubilden oder unmittelbar mit der Topfwandung 1, die Öffnung 2 überdeckend, zu verschweißen oder zu verlöten, so daß die Membrane 3 eine Teilfläche der Topfwandung 1 darstellt und dem Topfinnendruck 10 ausgesetzt ist. In diesem Falle würde das Gehäuse 4 nicht, wie bei dem zeichnerisch dargestellten Ausführungsbeispiel, durch die Topfwandung 1 hindurchragen, sondern auf der Außenseite der Topfwandung 1, den Membranbereich überdeckend, befestigt sein.

In dem Gehäuse 4 befindet sich eine mechanische Übertragungseinichtung, welche die Durchbiegung der Membranen 3 in die Auslenkung eines, in diesem Fall als Skalenzeiger ausgebildeten Anzeigeelements 21 umsetzt. Das Gehäuse 4 ist dabei an seinem topfabgewandten Ende durch ein eingebördeltes Schaufenster 9 verschlossen. Die Übertragungseinrichtung weist einen Stößel 11 auf, welcher sich gegen ein stabförmiges Trägerelement 12 mittels einer Feder 23 abstützend, stirnseitig an der Außenfläche der Membrane 3 anliegt. Der Stößel 11 ist hülsenförmig ausgebildet und umfaßt mit seinem topfabgewandten Wandungsende das topfzugewandte Ende des Trägers 12, an welchem sich auch die Feder 23 abstützt. Die Feder 23 wirkt andererseits auf die Innenfläche der an der Membrane 3 anliegenden Stirnwandung des Stößels 11 ein. In der Seitenwandung des Stößels 11 ist ein achssparalleles Langloch 13 vorgesehen, durch welches ein an dem Träger 12 festliegender Stift 15 hindurchgreift. Hierdurch wird der Bewegungsweg 14 des Stößels 11 relativ zu dem Träger 12 begrenzt. Der Stift 15 verhindert auch ein Verdrehen des Stößels 11 gegenüber dem Träger 12 und bildet die Achse eines Schwenkhebels 16. Der begrenzte Bewegungsweg 14 ist an die Durchbiegefähigkeit der Membrane 3 angepaßt. Der Stößel 11 trägt einen weiteren nach außen vorragenden Stift 17, welcher im Abstand von dem Stift 15 in eine Öffnung des Schwenkhebels 16 eingreift. Verschiebt sich der Stößel 11 um den Bewegungsweg 14, so wird der Schwenkhebel 16 um einen Winkel 18 geschwenkt. Der Schwenkhebel 16 weist an seinem oberen Rand eine Zahnung 19 auf, welche mit einem mittels Achse 22 in einer Trägerplatte 6 drehbar gelagerten Ritzel 20 zusammenwirkt. Oberhalb der Trägerplatte 6, mit welcher der Träger 12 durch Einbördeln in dem Gehäuse 4 festgelegt ist, sitzt auf der Achse 22 das als Skalenzeiger ausgebildete Anzeigeelement 21. Für die dem Anzeigeelement 21 zugeordnete Skala befindet sich entweder, wie insbesondere aus Fig. 3 hervorgeht, in dem Schaufenster 9 oder auf der Oberseite der Trägerplatte 6.

Das Sicherungselement 7 weist einen mittigen Anschlag 24 für die Membrane 3 auf, um zu verhindern, daß sich die Membrane 3 bei einem Unterdruck in dem Topfinneren zu weit nach innen durchbiegt.

Fig. 1 veranschaulicht ferner, daß das Gehäuse 4 von einem Griffknopf 26 aus wärmeisolierendem Material umgeben sein kann, so daß das Gehäuse 4 mit der in seinem feuchtigkeits- und dampfdicht abgeschlossenen Innenraum 25 aufgenommenen Übertragungs- und Anzeigeeinrichtung in den Gefäß- bzw. Topfgriff integriert ist. Der Griffknopf 26 läßt die Sicht auf das Schaufenster 9 selbstverständlich frei.

Sobald der mit der erfindungsgemäßen Einrichtung zur Anzeige des Topfinnendruckes ausgestattete Dampfdruckkochtopf druckdicht verriegelt und in Betrieb genommen ist, wirkt der Topfinnendruck 10 auf die Innenfläche der Membrane 3 ohne Freigabe irgendeiner Öffnung ein. Bei steigendem Topfinnendruck wird die Membrane 3 in Pfeilrichtung 10 bewegt; aufgrund ihrer Einspannung am Außenrand wölbt sie sich lediglich nach außen gegen den Stößel 11 durch, welcher sich damit ebenfalls in Richtung der Druckbeauflagung 10 bewegt. Die Bewegung des Stößels 11 wird durch die Anzeigemechnik in der geschilderten Weise auf das Anzeigeelement 21 übertragen. Fällt der Topfinnendruck ab, so bewegen sich der Stößel 11 und die Membrane 3 unter Mitwirkung der Feder 23 in ihre Ausgangslage zurück. Dementsprechend wird unter Mitwirkung der Feder 23 auch die Übertragungsmechanik mit dem Schwenkhebel 16 und das Anzeigeelement 21 zurückgestellt. Tritt bei raschem und starkem Abkühlen ein Unterdruck im Topfinneren auf, so versucht sich die Membrane 3 nach innen durchzuwölben. Ein Einknicken der Membrane 3 ist jedoch durch den ggf. einstell- und justierbaren Anschlag 24 vermieden. Die Membrane 3 kann sich daher insgesamt nur zwischen dem Anschlag 24 und dem Stößel 11 in seiner durch das Langloch 13 begrenzten äußersten Stellung bewegen. Eine Überdehnung der Membrane 3 ist dadurch vermieden.

In dem Innenraum 25 des Gehäuses 4 können außer oder statt der Übertragungs- und Anzeigemechanik auch elektrische oder elektronische Bau- und Anzeigeteile vorgesehen sein, die beispielsweise eine elektromechanische und/oder elektronische Umsetzung der von der Membrane 3 gelieferten Anzeigeimpulse in eine sichtbare Anzeige, z.B. auch eine Digitalanzeige, umwandeln.

Bezugszeichenliste:

1. Topfwandung
2. Öffnung
3. Membrane
4. Gehäuse
5. Gewindeabschnitt
6. Trägerplatte
7. Sicherungselement
8. Dichtung
9. Schaufenster
10. Topfinnendruck
11. Stößel
12. Träger
13. Langloch
14. Bewegungsweg
15. Stift
16. Schwenkhebel
17. Stift
18. Winkel
19. Zahnung
20. Ritzel
21. Anzeigeelement
22. Achse
23. Feder
24. Anschlag
25. Innenraum
26. Griffknopf

**Patentansprüche**

1. Topf zum Garen von Kochgut od. dgl., bestehend aus Gefäß und Deckel, mit einer Einrichtung zum Anzeigen des Topfinnendruckes, welche an der Topfwandung (1), d.h. der Deckel- oder der Gefäßwandung, vorgesehen ist, dadurch gekennzeichnet, daß ein Bereich der Topfwandung (1) von einer flexiblen Membrane (3) gebildet ist, welcher eine Einrichtung zur Übertragung der druckbedingten Durchbiegung der Membrane (3) an ein Anzeigeelement (21) zugeordnet ist.

2. Topf nach Anspruch 1, dadurch gekennzeichnet, daß die Membrane (3) einstückig aus der Topfwandung (1) herausgearbeitet ist.

3. Topf nach Anspruch 1, dadurch gekennzeichnet, daß die Membrane (3) eine Öffnung (2) in der Topfwandung (1) verschließt.

4. Topf nach Anspruch 3, dadurch gekennzeichnet, daß die Membrane (3) zum Verschließen der Öffnung (2) mit der Topfwandung (1) verschweißt oder verlötet ist.

5. Topf nach Anspruch 3, dadurch gekennzeichnet, daß die Membrane (3) Teil eines z.B. hülsenförmigen Gehäuses (4) ist, welches in die Öffnung (2) der Topfwandung (1) z.B. durch Verschrauben und z.B. durch Zwischenlage einer Dichtung (8) druckdicht einsetzbar ist.

6. Topf nach Anspruch 5, dadurch gekennzeichnet, daß die Membrane (3) einstückig mit dem Gehäuse (4) ausgebildet oder mit diesem druckdicht verschweißt, verlötet, verspannt oder auf andere Weise druckdicht verbunden ist.

7. Topf nach Anspruch 5 oder 6, dadurch gekennzeichnet, daß das Gehäuse (4) mit einem Gewindeabschnitt (5) nach innen durch die Öffnung (2) der Topfwandung (1) hindurchragt und auf den Gewindeabschnitt (5) ein Sicherungselement (7) aufgeschraubt ist.

8. Topf nach einem der Ansprüche 1-7, dadurch gekennzeichnet, daß die Übertragungseinrichtung mechanisch, opto-mechanisch, elektromechanisch, elektro-optisch oder elektronisch arbeitet.

9. Topf nach einem der Ansprüche 1-8, dadurch gekennzeichnet, daß die Übertragungseinrichtung einen von der Membrane (3) beaufschlagten, topfaußenseitigen Stößel (11) oder entsprechende andere Mittel zur Bewegungsübertragung aufweist, dessen bzw. deren druckbedingte, von der Membrane (3) herrührende Bewegung in eine Bewegung oder sonstige Einstellung eines Anzeigeelements (21), z.B. eines Skalenzeigers, umgesetzt wird.

10. Topf nach Anspruch 9, dadurch gekennzeichnet, daß der Stößel (11) an einem gehäusefesten Träger (12) geführt ist.

11. Topf nach Anspruch 10, dadurch gekennzeichnet, daß der Stößel (11) gegenüber dem Träger (12) in Richtung der Membrane (3) mittels Feder (23) vorgespannt ist.

12. Topf nach einem der Ansprüch 9-11, dadurch gekennzeichnet, daß der Bewegungsweg (14) des Stößels (11) durch Anschlagmittel (13, 15) begrenzt ist.

13. Topf nach einem der Ansprüche 10-12, dadurch gekennzeichnet, daß der Träger (12) als Führungsstab und der Stößel (11) als den Führungsstab übergreifende Hülse ausgebildet ist.

14. Topf nach einem der Ansprüche 10-13, dadurch gekennzeichnet, daß der Träger (12) an einer Trägerplatte (6) gehalten ist, welche mit dem Gehäuse (4), z.B. durch Einbördeln, verbunden ist.

15. Topf nach Anspruch 14, dadurch gekennzeichnet, daß das Anzeigelement (21) an der Trägerplatte (6) beweglich, z.B. drehbar, gelagert ist.

16. Topf nach Anspruch 14 oder 15, dadurch gekennzeichnet, daß die Trägerplatte (6) eine Skaleneinteilung für das Anzeigeelement (21) trägt.

17. Topf nach einem der Ansprüche 5-16, dadurch gekennzeichnet, daß das Gehäuse (4) hülsenförmig, vorzugsweise im wesentlichen hohlzylindrisch, ausgebildet ist sowie eine topfabgewandte Öffnung des Gehäuses (4), z.B. durch Einbördeln, mittels eines z.B. eine Skaleneinteilung aufweisenden Schaufensters (9) und eine topfzugewandte Öffnung des Gehäuses (4) mittels der Membrane (3) wasser- und dampfdicht verschlossen sind.

18. Topf nach einem der Ansprüch 5-17, dadurch gekennzeichnet, daß die Übertragungseinrichtung innerhalb des Gehäuses (4) in einem einerseits von dem Schaufenster (9) und andererseits von der Membrane (3) dicht verschlossenen kammerartigen Innenraum (25) angeordnet ist.

19. Topf nach Anspruch 17 oder 18, dadurch gekennzeichnet, daß die Trägerplatte (6) oder das Schaufenster (9) als Displayanzeigeelement ausgebildet ist.

20. Topf nach einem der Ansprüche 1-19, dadurch gekennzeichnet, daß der Membrane (3) topfinnenseitig ein vorzugsweise verstellbarer Anschlag (24) zugeordnet ist.

21. Topf nach Anspruch 20, dadurch gekennzeichnet, daß der Anschlag (24) Teil des Sicherungselements (7) für das Gehäuse (4) ist.

22. Topf nach einem der Ansprüche 1 bis 21, dadurch gekennzeichnet, daß die Membrane (3) gegenüber der Ebene der Topfwandung (1) zurückgesetzt, d.h. z.B. im Abstand von dem topfinnenseitigen Ende des Gehäuses (4) in dieses eingesetzt ist.

23. Topf nach einem der Ansprüche 5-21, dadurch gekennzeichnet, daß das Gehäuse (4) von einem Griffknopf (26) umschlossen ist.

24. Topf nach Anspruch 22, dadurch gekennzeichnet, daß der Griffknopf (26) zumindest begrenzt beweglich an dem Gehäuse (4) geführt ist.

25. Topf nach einem der Ansprüche 1 bis 25, dadurch gekennzeichnet, daß die Membrane (3) im wesentlichen in oder parallel der Ebene der Topfwandung (1) liegt.

26. Topf nach einem der Ansprüche 1 bis 25, dadurch gekennzeichnet, daß die Membrane (3) aus Metall, insbesondere aus rostfeiem Stahl oder aus einer Bronzelegierung besteht.

FIG.1

FIG.2

FIG.3

FIG.4

FIG.5

FIG.6

FIG.7

| | Europäisches Patentamt | **EUROPÄISCHER RECHERCHENBERICHT** | Nummer der Anmeldung |

EP 92 10 4668
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 541 256 (R. J. INGHAM) | 1,3,5-9, 17,18, 25,26 | A47J27/09 A47J45/06 |
| A | * Spalte 2, Zeile 27 - Spalte 4, Zeile 38; Abbildung 4 * | 15 | |
| | --- | | |
| X | DE-A-3 108 017 (FISSLER GMBH) | 1,3,4,8, 9,25,26 | |
| A | * Seite 9, Zeile 24 - Seite 11, Zeile 25; Abbildungen 1,4 * | 13,15,16 | |
| | --- | | |
| X | DE-A-2 510 808 (OBERSCHWÄBISCHE METALLWARENFABRIK GMBH) | 1,3, 5-11,26 | |
| Y | * Seite 10, Zeile 14 - Seite 13, Zeile 15; Abbildungen 8-11,15-17 * | 20,21 | |
| A | | 23,24 | |
| | --- | | |
| Y | FR-A-2 445 714 (SEB S.A.) * Seite 8, Zeile 10 - Zeile 25; Abbildung 2 * | 20,21 | |
| | --- | | |
| X | EP-A-0 032 406 (WÜRTEMBERGISCHE METALLWARENFABRIK AG) | 1,3, 8-11,17, 18,20, 22,25 | **RECHERCHIERTE SACHGEBIETE (Int. Cl.5)** A47J |
| A | * Seite 8, Zeile 14 - Seite 9, Zeile 15; Abbildung 1 * | 7,12,23 | |
| | --- | | |
| X | FR-A-949 337 (NATIONAL PRESSURE COOKER COMPANY) | 1,3, 8-12,20, 22,25 | |
| A | * Seite 3, Zeile 10 - Zeile 36; Abbildung 3 * | 13 | |
| | --- | | |
| A | FR-A-2 403 501 (J. LOCATELLI) * Seite 4, Zeile 25 - Zeile 31; Abbildungen 2,3 * | 12 | |
| | --- | | |
| A | FR-A-2 535 190 (GIORINOX SPA.) * Seite 2, Zeile 2 - Zeile 11; Abbildung 1 * | 23 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 12 JUNI 1992 | J. SCHMITT |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)

Europäisches
Patentamt

**EUROPÄISCHER RECHERCHENBERICHT**

Nummer der Anmeldung

EP    92 10 4668
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 183 528 (PLASTICS (WEDNESBURY) LTD.) <br> * Zusammenfassung; Abbildung * <br><br> ----- | 23 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 12 JUNI 1992 | J. SCHMITT |

EPO FORM 1503 01.82 (P0403)